(19) Europäisches Patentamt
European Patent Office
Office européen des brevets

(11) **EP 2 617 541 A1**

(12) **EUROPEAN PATENT APPLICATION**
published in accordance with Art. 153(4) EPC

(43) Date of publication:
**24.07.2013 Bulletin 2013/30**

(21) Application number: **11825283.2**

(22) Date of filing: **16.09.2011**

(51) Int Cl.:
**B28B 3/22** (2006.01)    **B28B 3/20** (2006.01)

(86) International application number:
**PCT/JP2011/071261**

(87) International publication number:
**WO 2012/036285 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010 JP 2010209583**

(71) Applicant: **Sumitomo Chemical Company Limited Tokyo 104-8260 (JP)**

(72) Inventor: **YOSHINO Hajime**
**Niihama-shi**
**Ehime 792-8521 (JP)**

(74) Representative: **Vossius & Partner**
**Siebertstrasse 4**
**81675 München (DE)**

(54) **EXTRUSION-MOLDING DEVICE AND METHOD FOR PRODUCING MOLDED ARTICLE USING SAME**

(57)    An extrusion-molding device of the present invention includes: a housing having a channel that transfers a pasty raw material composition; a screw provided upstream of the channel that kneads the raw material composition and transfers the raw material downstream; a die provided downstream of the channel that extrudes a molded article made up of the raw material composition; a resistive tube that connects the channel and the die; a flow rate adjustment plate provided between the screw and the die that is detachable with respect to the housing and that has a plurality of through holes penetrating in a thickness direction; and an upstream blocking member that is detachable with respect to an upstream face of the flow rate adjustable plate and that simultaneously blocks upstream openings of some through holes of the plurality of through holes in a state of being attached to the flow rate adjustable plate.

**Fig.6**

## Description

## Technical Field

The present invention relates to a technology for producing a molded article, and more particularly, to an extrusion-molding device for producing a ceramic molded article and a method for producing the molded article using the same.

## Background Art

Conventionally, a honeycomb filter structure has been widely known as used for a DPF (Diesel particulate filter), etc. This honeycomb filter structure has the structure in which one end sides of some through holes of the honeycomb structure having a number of through holes are plugged with a plugging material, and the other end sides of the remaining through holes are plugged with the plugging material. Patent Literatures 1 and 2 disclose a die and an extrusion-molding device that are used for producing a honeycomb structure.

## Citation List

## Patent Literature

[0003]

　　　Patent Literature 1: Japanese Patent Laid-Open No. 61-5915
　　　Patent Literature 2: Japanese Patent No. 4099896

## Summary of Invention

## Technical Problem

Meanwhile, a honeycomb filter structure for a DPF is generally used in a state of being housed in a case having rigidity. When dimensional accuracy of the honeycomb filter structure is low, failure, such as a crack in the honeycomb filter structure due to a thermal stress etc., easily occurs. Therefore, high dimensional accuracy is required for a green molded article before firing. In addition, some honeycomb structures have narrow cell pitches (for example, approximately 1.1 to 2.8 mm), and high dimensional accuracy is requested also for a thickness of a partition wall that defines a number of through holes.

Usually, a raw material composition that flows near an inner wall face of a channel in an extrusion-molding device has a low flow rate, and on the other hand, the raw material composition that flows through the center of the channel has a high flow rate. If the raw material composition is extruded from a die with this flow velocity distribution being kept, and a green molded article for a honeycomb structure is fabricated, failure occurs, such as the partition wall of a central portion of the green molded article being thicker as compared with other portions, or a partition wall being curved. In addition, if the flow velocities of the raw material composition that passes through the die are non-uniform, not only non-uniform abrasion of materials constituting the die causes deterioration of dimensional accuracy of the molded article, but life of the die may become significantly shorter due to preferential abrasion of a part of the die.

In order to uniform the flow velocities of the raw material composition, a flow rate adjustment plate having a number of through holes may be arranged upstream of the die. When a thickness and a shape of a partition wall of a molded article extruded from the die are checked, and failure considered to be caused by non-uniformity of the flow velocity distribution is found, it is considered that a predetermined through hole of the flow rate adjustment plate is blocked with a pin to thereby eliminate the failure. In order to newly attach the pin to a body of the flow rate adjustment plate, or to change a position of the pin, the flow rate adjustment plate needs to be removed from the extrusion-molding device. Taking a long time for this work leads to a problem that a time becomes longer when the extrusion-molding device cannot be operated, and that production efficiency of the molded article is lowered.

The present invention is made in view of the above-described actual situation, and an object thereof is to provide an extrusion-molding device that can efficiently produce a molded article with high dimensional accuracy, and a method for producing the molded article using the extrusion-molding device.

## Solution to Problem

An extrusion-molding device pertaining to the present invention includes: a housing having a channel that transfers a pasty raw material composition; a screw provided upstream of the channel that kneads the raw material composition and transfers the raw material downstream; a die provided downstream of the channel that extrudes a molded article made up of the raw material composition; a resistive tube that connects the channel and the die; a flow rate adjustment plate provided between the screw and the die, being detachable with respect to the housing, and having a plurality of through holes penetrating in a thickness direction; and an upstream blocking member detachable with respect to an upstream face of the flow rate adjustment plate and simultaneously blocking upstream openings of some through holes of the plurality of through holes in a state of being attached to the flow rate adjustment plate.

The flow rate adjustment plate included in the extrusion-molding device of the present invention is for achieving uniformity of flow velocity distribution of the raw material composition introduced into the die. This flow rate adjustment plate can simultaneously block the plurality of through holes located in a region where a flow rate of the raw material composition is high using the upstream blocking member. Therefore, when an appearance of an extruded molded article is checked, and failure considered to be caused by non-uniformity of the flow velocity distribution is found, the flow rate adjustment plate is removed from the housing, the upstream blocking member is newly attached to the flow rate adjustment plate, a position of the upstream blocking member is changed, and thereby a molded article with sufficiently high dimensional accuracy can be produced continuously. It is to be noted that the flow rate adjustment plate may have a net-like resistor in order to enhance an effect of flow rate adjustment. As the net-like resistor, for example, a wire net with a mesh count of 5 to 200 meshes (more preferably, 50 to 150 meshes) can be used. One sheet or two or more sheets of wire net(s) is (are) arranged on an upstream surface of a rectifying plate 5, thereby a higher flow rate adjusting effect can be obtained, and foreign substances included in the raw material composition can be removed. The mesh count (mesh) of the wire net described herein means the number of meshes in one inch (25.4 mm). In selecting a mesh to be used, it is set as the primary condition that an aperture W of the mesh is comparatively small with respect to an opening (slit width) of the die and further, the mesh having a wire diameter d with a sufficient strength may just be selected. A mesh count N can be calculated by the following formula.

$$N = 25.4 / (W+d)$$

In the formula, W denotes an aperture (mm) of the mesh, and d denotes a wire diameter (mm) of the mesh.

According to the present invention, since the plurality of through holes can be simultaneously blocked with the upstream blocking member, flow control can be efficiently implemented compared with a case where each through hole is blocked with a pin. It is to be noted that when flow control with much higher accuracy is needed, the upstream blocking member and the pin for blocking the through holes may just be used together.

The extrusion-molding device of the present invention may further include a downstream blocking member detachable with respect to a downstream face of the flow rate adjustment plate and simultaneously blocking downstream openings of the plurality of through holes whose upstream openings are blocked by the upstream blocking member in a state of being attached to the flow rate adjustment plate. By employing such a configuration, the raw material composition can be prevented from staying in the through holes whose upstream openings have been blocked. A bolt can be included as means for removably fixing the upstream blocking member and the downstream blocking member to the flow rate adjustment plate.

From a viewpoint of reduction of a pressure loss and prevention of retention of the raw material composition around the flow rate adjustment plate, the upstream blocking member and the downstream blocking member each preferably have a streamlined surface.

The present invention provides a method for producing a molded article using the above-described extrusion-molding device. According to the method of the present invention, a molded article with high dimensional accuracy can be sufficiently efficiently produced due to action of the flow rate adjustment plate.

The method for producing the molded article pertaining to the present invention can include a step of attaching the upstream blocking member and the downstream blocking member to the flow rate adjustment plate, or a step of changing positions of the upstream blocking member and the downstream blocking member in the flow rate adjustment plate. By appropriately implementing these steps, it becomes possible to continuously produce a molded article with sufficient high dimensional accuracy over a long period of time. These processes may be implemented after supply of the raw material composition to the extrusion-molding device is once stopped, or may be implemented without stopping the supply.

**Advantageous Effects of Invention**

According to the present invention, a molded article with high dimensional accuracy can be sufficiently efficiently produced.

**Brief Description of Drawings**

Fig. 1 (a) is a perspective view showing one example of a green molded article for a honeycomb structure, and Fig. 1 (b) is a partially enlarged view of the green molded article.
Fig. 2 is a schematic cross-sectional view showing one embodiment of an extrusion-molding device pertaining to the present invention.
Fig. 3 is a partial cross-sectional view schematically showing an internal structure of the extrusion-molding device of Fig. 2.
Figs. 4 (a) and 4 (b) are views showing one example of a flow rate adjustment plate.
Fig. 5 is a partial cross-sectional view showing another aspect of an opening of the flow rate adjustment plate.
Fig. 6 is a cross-sectional view showing a state where an upstream blocking member and a downstream blocking member are attached to the flow rate adjustment plate shown in Fig. 4 (b).
Fig. 7 is a plan view showing a face (an upstream face) on the side of the downstream blocking member, where the downstream blocking member is in contact with the flow rate adjustment plate.
Fig. 8 (a) is a cross-sectional view schematically showing flow velocity distribution of a raw material composition in a channel in which the flow rate adjustment plate has been arranged, and Fig. 8 (b) is a cross-sectional view schematically showing flow velocity distribution of the raw material composition in the channel in which the flow rate adjustment plate has not been arranged.

Figs. 9 (a) and 9 (b) are views showing a green molded article having a curved partition wall.

**Description of Embodiments**

Hereinafter, a preferred embodiment of the present invention will be described in detail with reference to drawings. First, prior to description of an extrusion-molding device pertaining to the present invention, a green molded article for a honeycomb structure will be described.

<Green molded article>

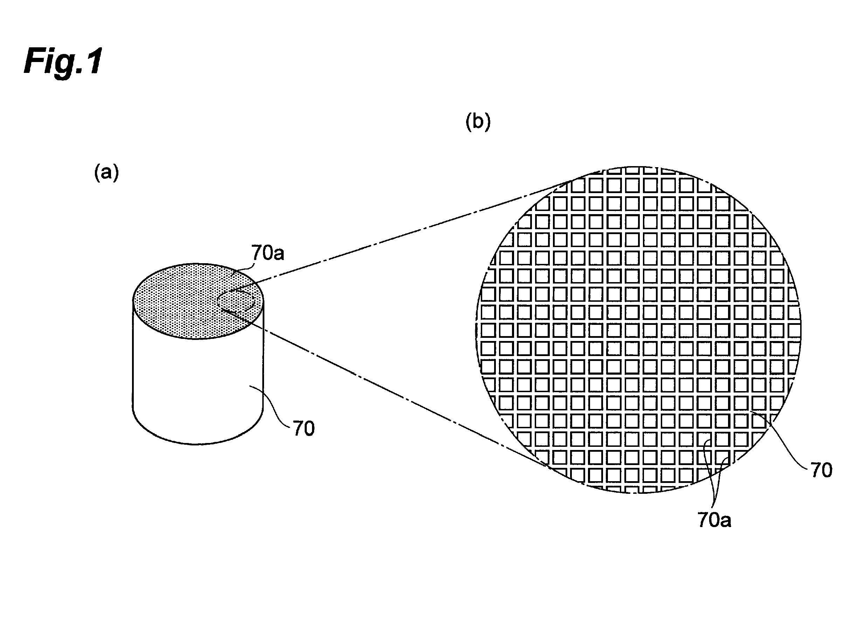

A green molded article 70 shown in Figs. 1 (a) and 1 (b) are the one obtained by extrusion-molding a raw material composition. As shown in Fig. 1 (a), the green molded article 70 is a columnar body in which a number of through holes 70a arranged substantially in parallel. A cross-sectional shape of the through hole 70a is a square as shown in Fig. 1 (b). These plurality of through holes 70a have a square arrangement seen from an end face in the green molded article 70, i.e., they are arranged so that central axes of the through holes 70a are located at vertices of squares, respectively. A size of the square of the cross section of the through hole 70a can be, for example, set as 0.8 to 2.5 mm on a side. It is to be noted that a honeycomb structure is produced by firing the green molded article 70 at a predetermined temperature.

A length in a direction where the through hole 70a of the green molded article 70 extends is not particularly limited, and it can be, for example, set as 40 to 350 mm. In addition, an outer diameter of the green molded article 70 is not particularly limited, either, and it can be, for example, set as 100 to 320 mm.

The raw material composition constituting the green molded article 70 is not particularly limited, and in a case of producing a honeycomb structure for a DPF, there are included: inorganic compound source powder that is a ceramic raw material; organic binders, such as methylcellulose; and an additive added if needed. From a viewpoint of high-temperature resistance of the honeycomb structure, as a preferred ceramic material, there are included: oxides, such as alumina, silica, mullite, cordierite, glass, and aluminum titanate; silicon carbide; silicon nitride; etc. It is to be noted that aluminum titanate can further include magnesium and/or silicon.

For example, when a green molded article including aluminum titanate is produced, inorganic compound source powder includes: aluminum source pow-

der, such as $\alpha$ alumina powder; and titanium source powder, such as anatase-type or rutile-type titania powder, and can further include: if needed, magnesium source powder, such as magnesia powder and magnesia spinel powder; and/or silicon source powder, such as silicon oxide powder and a glass frit.

As the organic binder, there are included: celluloses, such as methylcellulose, carboxymethyl cellulose, hydroxyalkyl methyl cellulose, and sodium carboxylmethyl cellulose; alcohols, such as polyvinyl alcohol; and lignin sulfonate.

As the additive, there are included, for example, a hole-forming agent, a lubricant and a plasticizer, a dispersant, and a solvent.

As the hole-forming agent, there are included: carbon materials, such as graphite; resins, such as polyethylene, polypropylene, and polymethyl methacrylate; vegetable materials, such as starch, nut husk, walnut husk, and cone; ice; dry ice; etc.

As the lubricant and the plasticizer, there are included: alcohols, such as glycerin; higher fatty acids, such as caprylic acid, lauric acid, palmitic acid, arachidic acid, oleic acid, and stearic acid; metallic stearate, such as stearic acid Al; POAAE (polyoxyalkylene alkyl ether); etc.

As the dispersant, there are included: for example, inorganic acids, such as nitric acid, hydrochloric acid, and sulfuric acid; organic acids, such as oxalic acid, citric acid, acetic acid, malic acid, and lactic acid; alcohols, such as methanol, ethanol, and propanol; surfactants, such as polycarboxylic acid ammonium and polyoxyalkylene alkyl ether; etc.

As the solvent, there can be used: for example, alcohols, such as methanol, ethanol, butanol, and propanol; glycols, such as propylene glycol, polypropylene glycol, and ethylene glycol; water; etc.

<Extrusion-molding device>

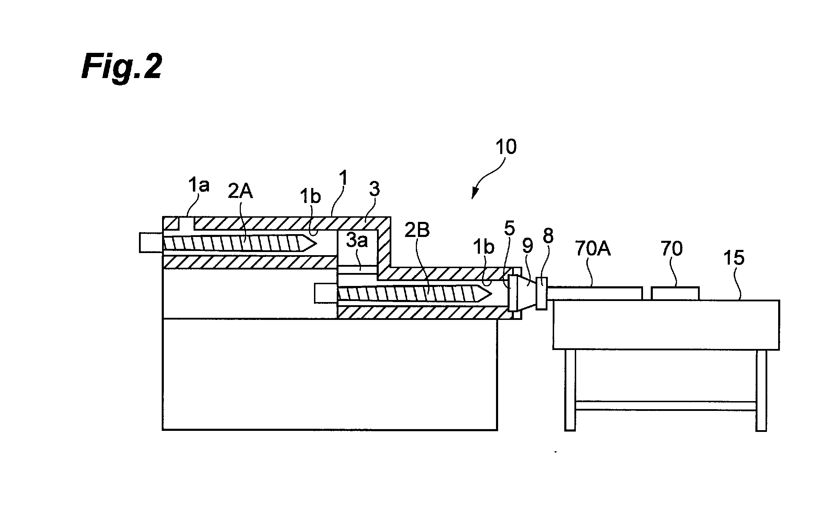

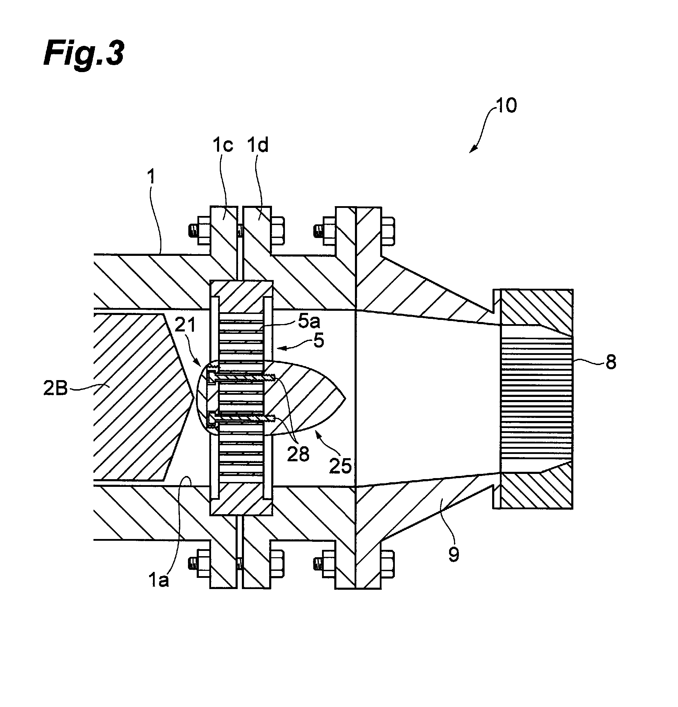

The embodiment of the extrusion-molding device pertaining to the present invention will be described with reference to Figs. 2 to 7. An extrusion-molding device 10 shown in Fig. 2 is the device for producing the green molded article 70 from a powdery or pasty raw material composition.

The extrusion-molding device 10 includes a screw 2A provided at an upper tier and a screw 2B provided at a lower tier in a housing 1. The screws 2A and 2B are the screws for kneading the raw material composition supplied from an inlet 1a, and transferring it downstream through a channel 1b. A vacuum chamber 3 is provided between the screws 2A and 2B, and deaeration treatment of the raw material composition can be performed by depressurizing an inside of the vacuum chamber 3. The raw material composition in the vacuum chamber 3 is introduced into the screw 2B at the lower tier by a roller 3a.

The extrusion-molding device 10 further includes: a flow rate adjustment plate 5 provided downstream of the screw 2B; a die 8 from which a molded article 70A including a raw material composition is extruded; and a resistive tube 9 that allows the channel 1b and the die 8 to communicate with each other. An internal channel of the resistive tube 9 has a tapered shape, and a channel cross-sectional area becomes gradually smaller from upstream to downstream. It is to be noted that when the molded article 70A with a diameter larger than that of the screw 2B is produced, etc., the resistive tube 9 may have an enlarged portion in which a channel cross section becomes larger from upstream to downstream. A support base 15 for supporting the molded article 70A is installed next to the extrusion-molding device 10 so that the molded article 70A extruded from the die 8 does not deform.

The flow rate adjustment plate 5 is the plate for achieving uniformity of flow velocity distribution of the raw material composition, prior to introducing the raw material composition into the die 8. The flow rate adjustment plate 5 is detachably provided in the housing 1, and is arranged between the screw 2B and the die 8. The flow rate adjustment plate 5 is fixed to the housing 1 by tightening flanges 1c and 1d with bolts and nuts. The flow rate adjustment plate 5 may have a net-like resistor (not shown) in order to enhance an effect of flow control.

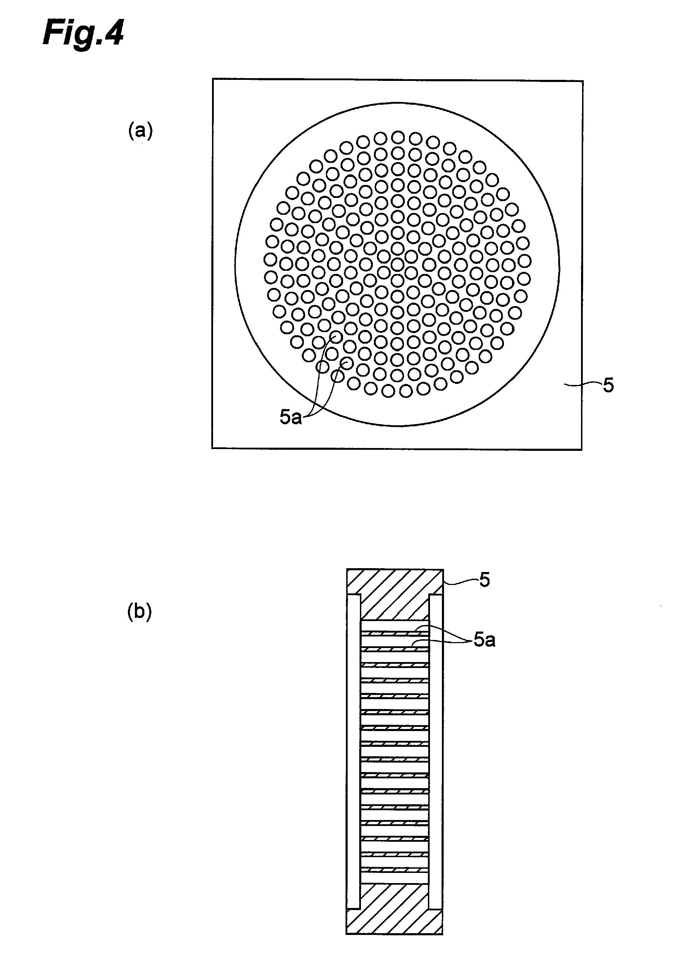

The flow rate adjustment plate 5 has a plurality of through holes 5a with a diameter of 1 to 10 mm that penetrate in a thickness direction. Fig. 4 (a) is an elevational view showing the flow rate adjustment plate 5, and Fig. 4 (b) is a cross-sectional view thereof. The flow rate adjustment plate 5 preferably is a structure that is hardly distorted even though pressurized from upstream. From such a viewpoint, a material of the flow rate adjustment plate 5 preferably is, for example, carbon steel etc. As preferred material other than carbon steel, special steel containing nickel, chromium, tungsten, etc. can be exemplified. A thickness of the flow rate adjustment plate 5 preferably is 10 to 100 mm from a viewpoint of securing a sufficient strength.

An opening ratio of the flow rate adjustment plate 5 preferably is 30 to 80%. When the flow rate adjustment plate 5 with an opening ratio less than 30% is used, a sufficient amount of raw material composition cannot be passed per unit time unless an upstream pressure is set to be excessively high, and thus the pressure tends to be not less than an allowable pressure of the device. On the other hand, the flow rate adjustment plate 5 with an opening ratio exceeding 80% tends to have an insufficient strength. The opening ratio of the flow rate adjustment plate 5 preferably is 40 to 80%, and more preferably is 50 to 80%.

The "opening ratio" described herein means a value calculated by dividing a total area of the openings in one face of the flow rate adjustment plate 5 by an area of the one face (except for a periphery covered with the housing).

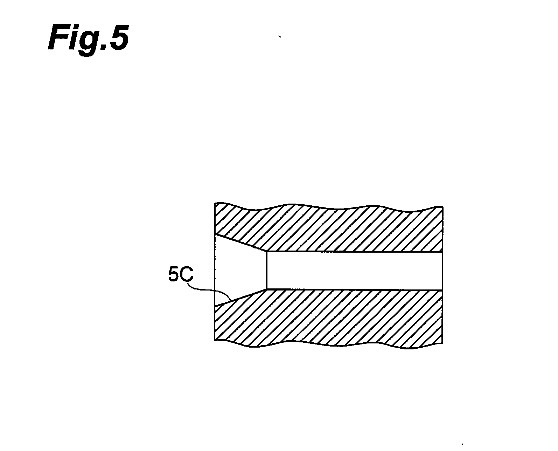

As shown in Fig. 5, in order to improve an opening ratio in a face on an inflow side of the raw material composition, the opening of the flow rate adjustment plate 5 may have a taper 5c on the inflow side. It is to be noted that when used is the flow rate adjustment plate in which the channel cross-sectional area of the opening is not constant as described above, total areas of the openings may change according to positions in the thickness direction of the flow rate adjustment plate (a transport direction of the raw material composition), but the "opening ratio" means a value calculated using a minimum value of the total areas.

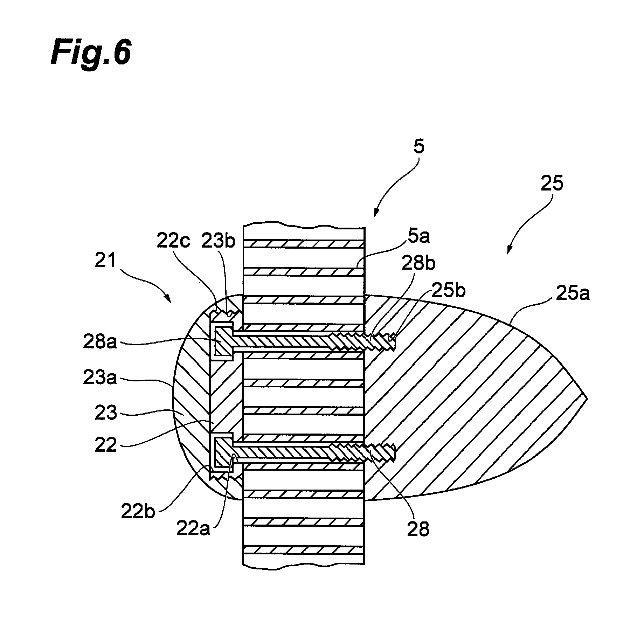

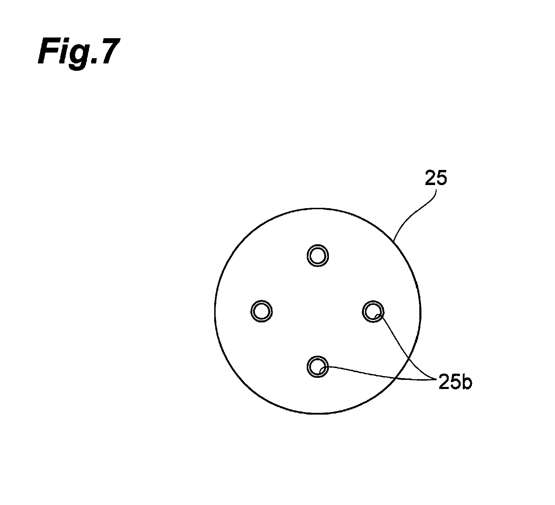

As shown in Figs. 6 and 7, an upstream blocking member 21 and a downstream blocking member 25 are attached upstream and downstream of the flow rate adjustment plate 5 using four bolts 28, respectively. It is to be noted that the number of the bolts 28 is not limited to four.

The upstream blocking member 21 includes: a pressing plate 22 where a spot facing 22b has been formed in which a through hole 22a for the bolt 28 and a head 28a of the bolt 28 are housed; and a streamlined member 23 having a streamlined surface 23a arranged to cover the pressing plate 22. The pressing plate 22 is detachable with respect to an upstream face of the flow rate adjustment plate 5, and simultaneously blocks upstream openings of the plurality of through holes 5a less than the number of all the through holes 5a of the flow rate adjustment plate 5 in a state of being attached to the flow rate adjustment plate 5. Namely, the pressing plate 22 simultaneously blocks the upstream openings of some through holes 5a of all the through holes 5a of the flow rate adjustment plate 5. The number of the through holes 5a blocked by the pressing plate 22 can be adjusted by changing an area of the pressing plate 22. Thread grooves are formed in a side face 22c of the pressing plate 22 and an internal side face 23b of a concave portion of the streamlined member 23, respectively, and whereby the streamlined member 23 can be fixed to the pressing plate 22.

The downstream blocking member 25 is detachable with respect to a downstream face of the flow rate adjustment plate 5, and simultaneously blocks downstream openings of the plurality of through holes 5a whose upstream openings are blocked by the upstream blocking member 21 in a state of being attached to the flow rate adjustment plate 5. The downstream blocking member 25 has a streamlined surface 25a, and has a screw hole 25b in which a shaft portion 28b of the bolt 28 is inserted (refer to Fig. 6). The pressing plate 22 and the downstream blocking member 25 can be integrally fixed to the flow rate adjustment plate 5 by the bolt 28. It is to be noted that materials of the upstream blocking member 21 (the pressing plate 22 and the streamlined member 23) and the downstream blocking member 25 are not particularly limited as long as they have predetermined rigidity, and for example, there are included metal and resin.

Since the upstream blocking member 21 and the downstream blocking member 25 are detachable respect to the flow rate adjustment plate 5, they can block, if needed, the plurality of through holes 5a located in a region (for example, the center of the channel 1b) where a flow rate of the raw material composition is high. When a thickness and a shape of a partition wall of an extruded molded article are checked, and failure considered to be caused by non-uniformity of the flow velocity distribution is found, the green molded article 70 with sufficiently high dimensional accuracy can be continuously produced by changing positions of the blocking members 21 and 25. In addition, since the blocking members 21 and 25 both have the streamlined surface, both reduction of pressure loss and prevention of retention of the raw material composition in the flow rate adjustment plate 5 can be achieved sufficiently highly.

The die 8 is for producing a molded article with a shape shown in Fig. 1 (a) from the raw material composition, and has a lattice-shaped channel (not shown) corresponding thereto. In a die used for producing the molded article with a cell structure as the green molded article 70, a channel needs to be precisely set, and the die is generally expensive. Therefore, frequency of replacement work of the die is desirably low. In the present embodiment, frequency of changing setting of the die 8 can be reduced by changing the positions of the blocking members 21 and 25 in the flow rate adjustment plate 5, and long life of the die 8 is achieved by uniformizing flow of the raw material composition, thus enabling to reduce replacement frequency of the die 8.

<Method for producing green molded article>

Next, there will be described a method for producing the green molded article 70 using the extrusion-molding device 10. First, the raw material composition is introduced into the channel 1b through the inlet 1a. The raw material composition is kneaded and transferred downstream by rotating the screws 2A and 2B. The kneaded raw material composition is passed through the through hole 5a of the flow rate adjustment plate 5 to uniformize the flow velocity distribution, and subsequently, is introduced into the die 8. A linear velocity of the raw material composition on the downstream of the die 8 can be set to be approximately 10 to 150 cm/min.

The raw material composition in which uniformity of the flow velocity distribution has been achieved is extruded from the die 8, and the molded article 70A is collected on the support base 15. The green molded article 70 is obtained by cutting the molded article 70A into a predetermined length.

When failure considered to be caused by non-uniformity of flow distribution of the raw material composition is found, it is preferable to implement the following processes. For example, implemented is a process of newly attaching the upstream blocking member 21 and the downstream blocking member 25 to the flow rate adjustment plate 5 by once stopping supply of the raw material composition to the extrusion-molding device 10 or without stopping the supply. Alternatively, implemented is a process of changing the positions of the upstream blocking member 21 and the downstream blocking member 25 that have been already attached to the flow rate adjustment plate 5. By implementing these processes, the green molded article 70 with sufficiently high dimensional accuracy can be continuously produced over a long period of time without implementing setting change or replacement of the die 8.

Hereinbefore, the preferred embodiment of the present invention has been described in detail, but the present invention is not limited to the above-described embodiment. For example, although, in the above-described embodiment, the case has been exemplified where the streamlined blocking member is arranged both upstream and downstream of the flow rate adjustment plate 5, only the pressing plate 22 may be arranged upstream to thereby block the plurality of through holes 5a.

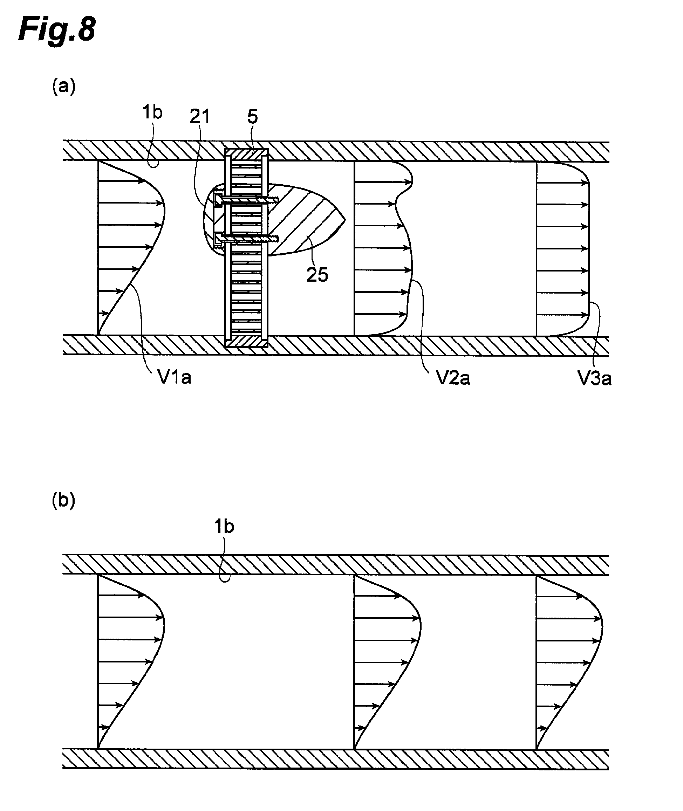

In addition, the case has been exemplified in the above-described embodiment where the blocking members 21 and 25 are attached to the center of the flow rate adjustment plate 5, but when curvature has occurred in the molded article 70A due to a high flow rate of the raw material composition in a partial region, the blocking members 21 and 25 may be attached so as to block the plurality of through holes 5a of the region. Fig. 8 (a) schematically shows flow velocity distribution of a pasty raw material composition that flows through the channel 1b. In the flow velocity distribution shown in Fig. 8 (a), a flow rate in a region upper than the center of the channel 1b is the highest. In this case, the upstream blocking member 21 and the downstream blocking member 25 may just be attached to positions into which the raw material composition flows with a high flow rate.

As shown in Fig. 8 (a), whereas flow velocity distribution V1a of the raw material composition before flowing into the flow rate adjustment plate 15 is non-uniform to a cross section of the channel, the raw material composition passes through openings of the flow rate adjustment plate 5 that are not blocked with the blocking members 21 and 25, and thereby flow velocity distribution of the raw material composition flowing out of the flow rate adjustment plate 15 is gradually uniformed to the cross section of the channel (refer to flow velocity distributions V2a and V2c). As a result of this, the green molded article 70 with a proper cell pitch, a thickness of a partition wall, etc. can be stably obtained (refer to Figs. 1 (a) and 1 (b)).

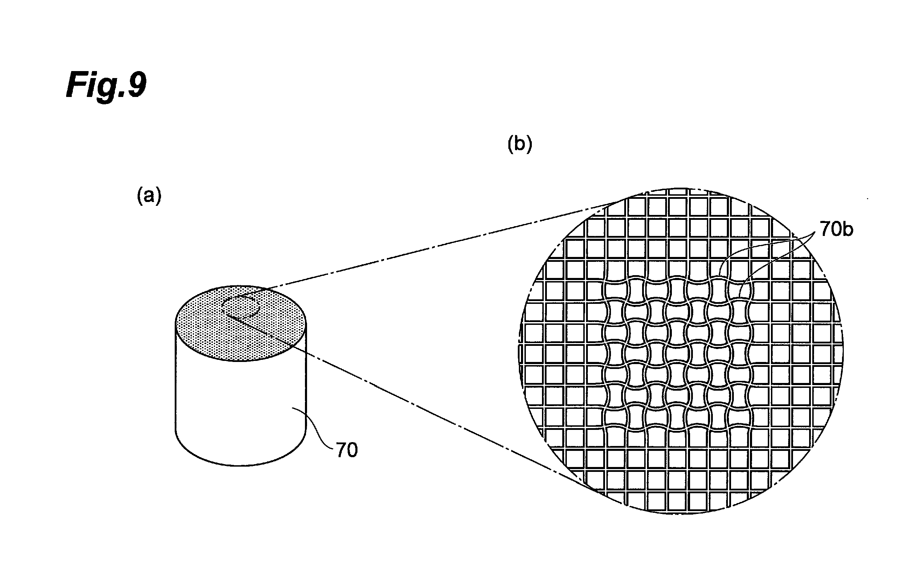

On the other hand, Fig. 8 (b) shows a case where the flow rate adjustment plate 5 is not arranged upstream of the die 8, and the raw material composition reaches the die 8 with flow velocity distribution thereof remaining non-uniform. In this case, as shown in Fig. 9B, failure, such as curvature of a partition wall 70b of the green molded article 70, occurs. One of causes of curvature of the partition wall 70b is excess supply of the raw material composition. By examining a region of the partition wall 70b in which curvature has occurred, it can be understood that the flow rate of the raw material composition in the region is high, and that a supply amount of the raw material composition is excessive. The flow rate adjustment plate 5 is prepared in which the blocking members 21 and 25 have been attached to suitable positions based on the above-described information, and is arranged upstream of the die 8, and thereby failure due to non-uniformity of the flow velocities can be improved.

In the above-described embodiment, the green molded article 70 as the columnar body has been exemplified, but a shape or a structure of the molded article are not limited to this. An outline shape of the green molded article 70 may be, for example, a prismatic column, such as a quadrangular prism, and an elliptic column. In addition, arrangement of the through holes 70a may not be square arrangement, either and, for example, may be substantially triangular arrangement, substantially hexagonal arrangement, etc. Furthermore, a shape of the through hole 70a may not be a square, either and, for example, may be a substantially triangular, hexagonal, octagonal, or circular shape.

**Industrial Applicability**

According to the present invention, a molded article with high dimensional accuracy can be sufficiently efficiently produced.

**Reference Signs List**

1: Housing, 1b: Channel, 2B: Screw, 5: flow rate adjustment plate, 5a: Through hole, 8: Die, 9: Resistive tube, 10: Extrusion-molding device, 21: Upstream blocking member, 22: Pressing plate, 23: Streamlined member, 23a: Streamlined surface, 25: Downstream blocking member, 25a: Streamlined surface, 28: Bolt, 70: Green molded article, 70A: Molded article

**Claims**

1. An extrusion-molding device comprising:

   a housing having a channel that transfers a pasty raw material composition;
   a screw provided upstream of the channel that kneads the raw material composition and transfers the raw material downstream;
   a die provided downstream of the channel that extrudes a molded article made up of the raw material composition;
   a resistive tube that connects the channel and the die;
   a flow rate adjustment plate provided between the screw and the die, being detachable with respect to the housing, and having a plurality of through holes penetrating in a thickness direction; and
   an upstream blocking member detachable with respect to an upstream face of the flow rate adjustable plate and simultaneously blocking upstream openings of some through holes of the plurality of through holes in a state of being attached to the flow rate adjustable plate.

2. The device according to claim 1, further comprising a downstream blocking member detachable with respect to a downstream face of the flow rate adjustable plate and simultaneously blocking downstream openings of the plurality of through holes whose upstream openings are blocked by the upstream blocking member in a state of being attached to the flow rate adjustment plate.

3. The device according to claim 2, wherein the downstream blocking member has a streamlined surface.

4. The device according to any one of claims 1 to 3, wherein the upstream blocking member has a streamlined surface.

5. The device according to claim 2, wherein the upstream blocking member and the downstream blocking member are fixed to the flow rate adjustment plate using bolts.

6. A method for producing a molded article using the extrusion-molding device according to any one of claims 1 to 5.

7. The method for producing a molded article using the extrusion-molding device according to claim 2, comprising a step of attaching the upstream blocking member and the downstream blocking member to the flow rate adjustment plate.

8. The method for producing a molded article using the extrusion-molding device according to claim 2, comprising a step of changing positions of the upstream blocking member and the downstream blocking member in the flow rate adjustment plate.

**Fig.1**

(b)

(a)

70a

70

70

70a

Fig.2

# Fig.3

*Fig.4*

(a)

5

5a

(b)

5

5a

# *Fig.5*

5C

# Fig.6

# Fig.7

# *Fig.8*

(a)

(b)

*Fig.9*

(a)

(b)

70

70b

<table>
<tr><td colspan="2" align="center">**INTERNATIONAL SEARCH REPORT**</td><td colspan="2">International application No.<br>PCT/JP2011/071261</td></tr>
</table>

**A. CLASSIFICATION OF SUBJECT MATTER**
*B28B3/22*(2006.01)i, *B28B3/20*(2006.01)i

According to International Patent Classification (IPC) or to both national classification and IPC

**B. FIELDS SEARCHED**

Minimum documentation searched (classification system followed by classification symbols)
B28B3/20-3/26, B29C47/00-47/96, B22F3/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-137186 A  (Denso Corp.),<br>19 June 2008 (19.06.2008),<br>claims; paragraphs [0008] to [0012]; drawings<br>(Family: none) | 1-8 |
| A | JP 2005-503280 A  (Corning Inc.),<br>03 February 2005 (03.02.2005),<br>claims; drawings<br>& WO 2003/026863 A1      & EP 1429901 A1<br>& US 2003/0057592 A1     & CN 1558820 A | 1-8 |
| A | JP 5-179309 A  (Tokin Corp.),<br>20 July 1993 (20.07.1993),<br>claims; paragraph [0005]; drawings<br>(Family: none) | 1-8 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 December, 2011 (12.12.11) | Date of mailing of the international search report<br>20 December, 2011 (20.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/071261 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 6-278114 A  (NGK Insulators, Ltd.), 04 October 1994 (04.10.1994), claims; paragraphs [0007] to [0008]; drawings (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61005915 A

- JP 4099896 B